# EUROPEAN PATENT APPLICATION

(11) **EP 3 797 957 A1**
(43) Date of publication of application: **31.03.2021**
(21) Application number: 19199485.4
(22) Date of filing: 25.09.2019
(51) Int. Cl.: B29B 17/00, G01N 21/958, B32B 17/10, B29D 11/00

(54) **APPARATUS FOR MEASURING AN OPTICAL PARAMETER OF A LAMINATED GLAZING**

(71) Applicant: Kuraray Europe GmbH, 65795 Hattersheim am Main (DE)
(72) Inventor: Haerth, Michael, 53859 Niederkassel (DE)
(74) Representative: Janßen, Christian Oliver

(57) **Abstract**

The present invention relates to an apparatus for measuring an optical parameter of a laminated glazing as well as to a method producing polyvinyl acetals film using such apparatus.

## Description

The present invention relates to an apparatus for measuring the luminance median value of a laminated glazing as well as to a method producing polyvinyl acetals film using such apparatus.

It is long known to produce interlayer films based on plasticized polyvinyl acetal by extrusion. Common for these extrusion processes is that a melt comprising plasticized polyvinyl acetal, usually plasticized polyvinyl butyral, is extruded through a thin die to produce a melt film. The shape of this melt film is then fixed or "frozen" by cooling in air and/or water.

For various reasons, the melt used in such extrusion processes often comprises more than one polyvinyl acetal resin. For example a mixture of polyvinyl acetal resins is used to adjust melt viscosity, tear strength or plasticizer compatibility.

Further, it is known to feed waste film containing polyvinyl acetal obtained as so called trimmings either directly after production of the film or during production of the laminated glazing. Such recycling process can reduce waste and thus, reduce cost of the production process.

Generally, minor amounts of a second polyvinyl acetal are dispersed in major amounts of a first polyvinyl acetal and at least one plasticizer. The more chemically different the polyvinyl acetals are, the more likely agglomeration of the first polyvinyl acetal in spheres or particles within the matrix of the second polyvinyl acetal and the plasticizer occurs. For example, US2016/0122526 A1 discloses the recycling of acoustic interlayers into monolayer film.

These spheres or particles are hardly detectable by the eye or the standard haze measuring methods due to their small size and/or a similar refractive index compared to the surrounding matrix.

Observable or not, the spheres or particles are present in the film and might affect transparency of the laminated glazing. While this might not affect an observers vision through a glazing, modern sensor technology has a far higher sensitivity than the human eye over a broader range of wavelengths. Optical sensors are gaining more and more importance in modern car technology; they are usually built in behind the windscreen and thus rely on high transmission and low haze of the windscreen.

Accordingly, it would be desirable to detect very low degrees of optical distortion in laminated glazing, which is difficult to detect by standard haze measuring methods like described in the industrial standard method ASTM 1003.

Such a method would also allow to more precisely calculate the maximum amount of a second polyvinyl acetal to be added to a mixture of a first polyvinyl acetal and a plasticizer without generating undesired spheres or particles resulting in an undesired optical distortions.

This and other problems has been solved by the present invention.

Accordingly, the present invention provides an apparatus to measure optical parameter of a laminated glazing comprising a light source and a photo detector characterized in that the illumination from the light source is directed through the longitudinal axis of the laminated glazing.

The term "directed through the longitudinal axis of the laminated glazing" is intended to mean that the light from the light source is shone not from the rear onto one of the surfaces of the glass pane of the laminated glazing as provided in ASTM 1003. Instead, it is shone onto the edge of the laminate and directed along its longitudinal axis.

Preferably, the optical parameter is selected from the luminance median value, the haze value, and/or the translucence. More preferably, the optical parameter is the luminance median value, most preferably the luminance median value in the RGB colour space. Alternatively, the colour space can be selected from the sRGB, CIE, YIQ, YUV, YDbDr, HSV and HSL colour spaces.

The light source can be chosen from any conventional light source. Usually, it illuminates the laminate with the whole spectrum of visible light, e.g. a conventional light bulb or an LED. Alternatively, the light source can be a laser beam using only certain wavelengths. The light source is usually directly in contact with the edge of the laminate. Generally, the light source operates with from 100 to 900 lumen. Preferably, it contains at least one light-emitting diode, more preferably the light source is a stripe of LEDs which is positioned alongside the edge of the laminate.

The photo detector can be chosen from any conventional photo detector. Alternatively, the photo detector can be the human eye, i.e. the laminated glazing is visually inspected. Preferably, the photo is a digital camera. Generally, the photo detector is located in a distance of from 5 to 100 cm from the surface of the glass pane closest to the photo detector. Preferably, the distance is from 10 to 30 cm. In most applications, the photo detector is positioned in a way that it is performing in a 90º angle onto the glass surface. However, it can also be adjusted to measure the transmitting light in a wider angle, preferably in an angle between 30 and 120º, most preferably in an angle of 45º.

### Brief description of the drawings

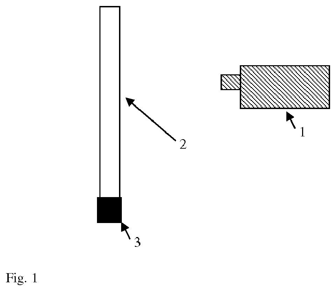

**Fig. 1** shows a schematic the apparatus according to the invention using a digital camera (1), an LED stripe (3) attached to the laminated glazing (2)
Preferably, the laminated glazing comprises at least one film based on at least one polyvinyl acetal and at least one plasticizer sandwiched between at least two sheets of glass.

One or more chemically different polyvinyl acetal resins may be used as first and/or second polyvinyl acetal resin. Such polyvinyl acetals may differ in polyvinyl alcohol content, degree of acetalisation, residual acetate content, ethylene proportion, molecular weight and/or chain lengths of the aldehyde of the acetal groups.

A difference in polyvinyl alcohol content, i.e. in the content of free hydroxyl groups in the polymer chain, is believed to have great influence on the incompatibility of two different polyvinyl acetals present in one film since the content of polyvinyl alcohol has a string impact in the hydrophilicity.

The polyvinyl acetal resins used in accordance with the invention are produced by reaction of at least one polyvinyl alcohol with one or more aliphatic unbranched aldehyde containing 2 to 10 carbon atoms. To this end, n-butyraldehyde or iso-butyraldehyde are preferably used to obtain n- and/or iso-polyvinylbutyral which are preferentially used in the invention.

The first and/or second polyvinyl acetal resins may have a content of polyvinyl acetate groups of 0.1 to 20 mol %, preferably 0.5 to 3 mol%, or 5 to 8 mol%.

The polyvinyl alcohol content of the used polyvinyl acetals may be between 14 - 26 wt%, 16 - 24 wt%, 17 - 23 wt% and preferably, between 18 and 21 wt%.

The polyvinyl acetal films of the invention may further contain alkali metal ion and/or earth alkali metal ion to adjust their adhesion level to glass. The concentrations given below are based on the final film.

The total amount of alkali metal salts may be as low as 0.005 wt% based on the weight of the interlayer film. Preferred ranges of alkali metal salt are 0.01 wt% - 0.1 wt%; 0.02 - 0.08 wt%; 0.03 - 0.06 wt%.

The melts used in accordance with the invention contain for example 14.0 - 40.0 wt%, preferably 15.0 - 32.0 wt% and in particular 26.0 - 30.0 wt% of one or more plasticizer.

The plasticisers can be chosen from the following groups:
- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.
- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids; Examples of the latter group include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether and/or dipropylene glycol benzoate
- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid.

Preferable, 1,2-cyclohexane dicarboxylic acid diisononyl ester (DINCH) or triethylene glycol-bis-2-ethyl hexanoate (3GO or 3G8) are used as plasticiser.

In addition, the melts may contain further additives, such as residual quantities of water, UV absorber, antioxidants, adhesion regulators, optical brighteners or fluorescent additives, stabilisers, colorants, processing aids, inorganic or organic nanoparticles, pyrogenic silicic acid and/or surface active substances.

The film produced with the method of the present invention is used as interlayer to produce glass laminates.

Lamination processes are known to the person skilled in the art. For example, so-called autoclave processes are carried out at an increased pressure from approximately 10 to 15 bar and temperatures from 100 to 150 °C during approximately 2 hours. Vacuum bag or vacuum ring methods (in a sense that no subsequent autoclave treatment is required), for example according to EP 1 235 683 B1, function at approximately 200 mbar and 130 to 145 °C.

Vacuum laminators can also be used for the lamination process. These consist of a chamber that can be heated and evacuated, in which laminated glass can be laminated within 30 - 60 minutes. Reduced pressures from 0.01 to 300 mbar and temperatures from 100 to 200 °C, in particular 130 - 160 °C, have proven their worth in practice.

In a second aspect, the present invention provides a process to measure optical parameter of a laminated glazing using the inventive apparatus as described above. Preferably, the optical parameter is selected from the luminance median value, the haze value, and/or the translucence.

In a third aspect the invention provides a process for the production of a polyvinyl acetal film comprising the process as described in the second aspect. Thus, the inventive apparatus is used before, during or after the production of a polyvinyl acetal film to measure an optical parameter of the film. For example, the apparatus is used during the production to measure an optical parameter and based on the results of the measurement, adjusting the process conditions, e.g. deciding whether more recycling material can be added to the polyvinyl acetal starting material. Furthermore, the apparatus can be used after the production process for quality control of the final film using a sample laminate of said film.

The inventive process is especially useful to determine the maximum amount of a second polyvinyl acetal to a first polyvinyl acetal, preferably for recycling a second polyvinyl acetal into the main starting material, the first polyvinyl acetal by determining an optical parameter more accurately.

Thus, the invention also relates to a process for the production of a polyvinyl acetal film comprising the steps of
a) preparing a film comprising a first polyvinyl acetal
b) preparing at least one additional film comprising the first polyvinyl acetal in admixture with a certain amount of a second polyvinyl acetal,
c) preparing glass laminates from the films produced in step a) and b) sandwiched between two glass panes,
d) measuring an optical parameter (the luminance median value) on the laminates prepared in step b) using the process according to claim 5,
e) using the results of the measurements obtained in step d) to determine the maximum acceptable amount of the second polyvinyl acetal resin to be added to the first polyvinyl acetal in order to achieve a pre-set value of the optical parameter (luminance median value of X) measured on a laminate prepared with a film prepared from a mixture of the first polyvinyl acetal and the determined amount of the second polyvinyl acetate.

The term "second polyvinyl acetal" shall denote a polyvinyl acetal which is different from the "first polyvinyl acetal". For example, the second polyvinyl acetal can have a content of polyvinyl alcohol units different to the first polyvinyl acetal, e.g. a difference of 1 to 15 wt%, preferably of 5 to 12 wt%. The terms "first polyvinyl acetal" and "second vinyl acetal" shall be construed to also encompass mixtures of different polyvinyl acetals as long as the first and the second polyvinyl acetal are different in their composition. For example, the second polyvinyl acetal is a three layer film consisting of two different grades of polyvinyl butyral.

### Examples

An apparatus to measure the luminance median value consists of a sample holder (laminate size 15 x 10 cm), an LED light source (type: Rolux DF-7024, 120 lumen) and a USB camera (Type: Micron Co., Ltd., DFx72BUC02). The distance between the sample holder and the camera was set to 20 cm. The setup is placed in a box printed black on the inside to eliminate ambient light.

The LED illumination from the longer, 15 cm edge of the sample laminate is started. An image is recorded using the USB camera in a 90° angle (direction of camera to glass surface) . An area of 5 x 3 cm located 2 cm above the illuminated edge is evaluated in the Red-Green-Blue (RGB) color space by calculating the median luminance value Y of all pixels according to Y = 0.2126 x R + 0.7152 x G + 0.0722 x B. The R,G,B,Y values range between 0 and 255, while 0 appears black.

For comparison, the haze value was measured with a HunterLab ColorQuest XE Spectrophotometer (commercially available by Hunter Associates Laboratory, Inc.) according to ASTM 1003, procedure B. (Illuminant C, observer angle 2 °).

The following examples shows a comparison of measuring laminates using the inventive apparatus compared to the haze value as determined following ASTM 1003.

### Example 1 - Influence of film thickness

A commercial polyvinyl butyral film (Trosifol® B100 monolayer available from Kuraray Europe GmbH) with different thicknesses (0.38 mm to 2.28 mm) has been laminated between two 2.1 mm glass plates using a nip-roller process and a standard autoclave cycle (90 min / 140 °C / 12 bar). The laminate size was 15 x 10 cm. After the autoclave process samples have been stored for at least 12 hours at room temperature.

Table 1 gives the results of haze measurements according to ASTM 1003 and the luminance median value Y according to the described method for interlayers thicknesses ranging from 0.38 mm to 2.28 mm.

**Table 1**

| Entry | Thickness / mm | Haze (ASTM 1003) / % | Luminance Median Value Y |
|---|---|---|---|
| 1 | 0.38 | 0.06 | 18 |
| 2 | 0.76 | 0.06 | 24 |
| 3 | 1.52 | 0.10 | 33 |
| 4 | 2.28 | 0.09 | 46 |

Table 1 shows that for the investigated film thickness range, the haze value as measured with standard method ASTM 1003 does not correlate with the film thickness within the accuracy of the measurement. On the other hand, the luminance median value Y as measured using the inventive method shows a good correlation between thickness and Y value. Thus, the standard industrial method does not provide a means for an appropriate haze measurement when the haze value is very low whereas the inventive method provide a means to predict the haze accurately.

### Example 2 - Influence of different amounts of multilayer film recycled into a monolayer film

Trimmings obtained in an extrusion process using a commercial multilayer polyvinyl butyral film ("second polyvinyl acetal", Trosifol® SC Multilayer obtainable from Kuraray Europe GmbH) were added to a major amount of a commercial monolayer polyvinyl butyral film of different thickness (Trosifol® B100 Monolayers, 0.38 mm - 1.52 mm, obtainable from Kuraray Europe GmbH) in varying amounts during film extrusion. The amount of trimmings has been calculated based on the pure poly(vinyl acetal) resin used. The lamination procedure was equivalent to Example 1.

**Table 2**

| Entry | Amount of added Trosifol® SC Multilayer / % | Thickness / mm | Haze (ASTM 1003) / % | Luminance Median Value Y |
|---|---|---|---|---|
| 5 | 5 | 0.38 | 0.12 | 22 |
| 6 | 7 | 0.38 | 0.08 | 28 |
| 7 | 10 | 0.38 | 0.10 | 37 |
| 8 | 5 | 0.76 | 0.11 | 31 |
| 9 | 7 | 0.76 | 0.08 | 54 |
| 10 | 10 | 0.76 | 0.09 | 69 |
| 11 | 5 | 1.52 | 0.12 | 89 |
| 12 | 7 | 1.52 | 0.23 | 126 |
| 13 | 10 | 1.52 | 0.15 | 146 |

As shown in Table 2 the haze value according to ASTM 1003 does not correlate with the amount of Trosifol® SC Multilayer added during extrusion. In addition the haze value is on a very low level which is usually accepted by the market. On the other hand the luminance median value Y increases significantly with increasing amount of Trosifol® SC Multilayer. This effect is even more pronounced for thicker films.

Depending on costumer and application requirements luminance values above a certain limit will not be accepted by the market even though the haze value according to ASTM 1003 is on a low level. Thus, the inventive method provides for a means to predict the amount of trimmings to be fed to virgin material without lowering the quality of the final glazing.

## Claims

1. An apparatus to measure an optical parameter of a laminated glazing comprising a light source and a photo detector **characterized in that** the illumination from the light source is directed through the longitudinal axis of the laminated glazing.

2. The apparatus according to claim 1 wherein the optical parameter is selected from the luminance median value, the haze value, and/or the translucence.

3. The apparatus according to claim 1 or 2 wherein the light source is made from at least one light-emitting diode.

4. The apparatus of any one of the claims above wherein the photo detector is a digital camera.

5. The apparatus of any one of the claims above wherein the laminated glazing comprises at least one film based on at least one polyvinyl acetal and at least one plasticizer sandwiched between at least two sheets of glass.

6. A process to measure an optical parameter of a laminated glazing using the apparatus according to any of claim 1 to 5.

7. The process according to claim 6 wherein the optical parameter is selected from the luminance median value, the haze value, and/or the translucence.

8. A process for the production of a polyvinyl acetal film comprising the process according to claim 6 or 7.

9. The process for the production of a polyvinyl acetal film according to claim 8 comprising the steps of
a) preparing a film comprising a first polyvinyl acetal
b) preparing at least one additional film comprising the first polyvinyl acetal in admixture with a certain amount of a second polyvinyl acetal,
c) preparing glass laminates from the films produced in step a) and b) sandwiched between two glass panes,
d) measuring an optical parameter (the luminance median value) on the laminates prepared in step b) using the process according to claim 5,
e) using the results of the measurements obtained in step d) to determine the maximum acceptable amount of the second polyvinyl acetal resin to be added to the first polyvinyl acetal in order to achieve a pre-set value of the optical parameter (luminance median value of X) measured on a laminate prepared with a film prepared from a mixture of the first polyvinyl acetal and the determined amount of the second polyvinyl acetate.
